# EUROPEAN PATENT SPECIFICATION

(11) **EP 2 111 099 B1**
(45) Date of publication and mention of the grant of the patent: **04.09.2019**
(21) Application number: 08705210.6
(22) Date of filing: 18.01.2008
(51) Int. Cl.: A01G 9/22, A01G 9/14

(54) **GREENHOUSE SCREEN**
GEWÄCHSHAUSSCHIRM
ECRAN DE SERRE

(30) Priority: 28.01.2007 SE 0700230
(43) Date of publication of application: 28.10.2009
(73) Proprietor: Ludvig Svensson B.V., 3225 LV Hellevoetsluis (NL)
(72) Inventor: HENNINGSSON, Göran, F-83140 Six Fours Les Plages (FR)
(74) Representative: Valea AB
(86) International application number: PCT/SE2008/000037
(87) International publication number: WO 2008/091192

(56) References cited:
- EP-A1- 0 109 951
- DD-A1- 254 964
- DE-A1- 3 722 411
- FR-A1- 2 786 062
- GB-A- 2 075 913
- US-A- 4 399 671
- US-A- 4 626 465
- US-A1- 2003 061 839

## Description

The present invention relates to a greenhouse screen or the like which is intended for substantially horizontal application and for thermal stratification of the air space under a greenhouse roof, and which prevents drop formation from condensation. The invention also relates to a method for making such a screen.

### BACKGROUND OF THE INVENTION

Greenhouse screens known as "fabrics" and intended to save energy and provide shade against strong solar radiation have been known for many years. They mainly comprise the following types:
- woven or crocheted products comprising strips of film, sheeting or sheet laminate;
- textile products in the form of woven, crocheted or non-woven products, and
- plastic sheeting, plastic sheet laminate or aluminium laminate.
Most of the screens available on the market during the last 10-20 years for large commercial greenhouse installations have been made of strips of sheeting. Although these products are relatively well developed and currently meet most of the requirements for their intended functions, there is room for improvement.
In recent years, the market and the needs have changed because of greatly increased energy prices which have led to greenhouses, inter alia for vegetables, having to invest in greenhouse fabrics, a situation which means that greenhouse screens are now subject to requirements other than those relating to, for example, pot plants or cut flowers, which were previously the major users of the technology.
Vegetable crops occupy very large areas, e.g. several hundred thousands of square metres. They need the largest possible input of light in the daytime (1% light loss means 1% production loss and hence 1% loss of profit margin), entailing a need for greenhouse fabrics not to become dirty, which is impossible to avoid, so they have to be replaced frequently, which is a price problem. There is therefore a need for a greenhouse fabric which is less expensive without entailing impairment of such characteristics as energy saving, condensate drop prevention and fabric drapability.

The constituent material needs to be manufacturable with the maximum possible permeability to light except where a certain shading effect is desired, as in areas with extreme solar radiation. What is therefore desirable is a flexible but simple product and production process.

Vegetable crops generate large amounts of air humidity which has to be dealt with correctly. In most cases there is an ever-present risk of condensation in greenhouse fabrics. Even a small amount of drop formation from the screen is not permissible, i.e. water vapour must be able to pass through the fabric without large amounts of air moving from the underside to the upper side of the fabric and vice versa (convection). Stratification of the air in the greenhouse is therefore desirable, with the fabric or screen separating the strata.

The moist environment and poor insulation of a greenhouse nevertheless make it impossible to entirely prevent condensation in the fabric. It is therefore important for the fabric to incorporate a function which can deal with temporary condensation situations by capillary binding and transfer from the underside to the upper side, or by dispersal of local condensation, so that drops are prevented.

Another common problem is the formation of algae, which occurs if the fabric is drawn together when it is wet and has no possibility of drying. It is therefore important that water is bound to the surfaces to the utmost possible and does not make its way into the fabric.

The great size of vegetable greenhouses imposes severe requirements for it to be possible to handle the fabric without its becoming damaged, not least when it is being installed. It needs to be strong and extremely unshrinkable. Lengths of up to 300 m are usual and the maximum shrinkage tolerance is 1-2 dm.

An important factor is being able to drape and compress the fabric to a small narrow "bundle" when not in use. This involves force, and any rough handling of the fabric may easily result in damage to the strips of sheeting. If the fabric is compressed even only slightly too much, the result may be bent and turned strips. Even if this happens only once, the fabric cannot be repaired and has to be replaced.

A greenhouse screen known from patent specification DD 254 964 is intended to be suspended parallel with the slope of a greenhouse roof but is totally unsuitable for being suspended horizontally, which would lead to the occurrence of water pockets. The greenhouses concerned usually have large span widths with a between-eaves distance of between 16 and 20 m. The resulting great heights to the roof apex are most prevalent in, for example, the Nordic countries, Germany and Italy. A greenhouse screen is also known from document GB-A-2075913.

The screen consists of reflective sheeting which has firmly sewn into it an elastic yarn system of longitudinal threads with bound-in transverse threads which are so powerfully stretched during manufacture that, when the yarn reverts to its unstretched state, the sheeting between the longitudinal threads forms longitudinal channels, the purpose of which is to lead away water which accumulates on the upper side of the sheeting. The perforations created by the sewing needles are at the upper edges of the channels, which means that the sheeting may form baglike depressions in which water can accumulate. This is totally impermissible, since it would lead to overstrain and damage to the installation during the drawing to and fro of the sheeting.

The sheeting would also readily become "saggy" and not be smooth, resulting in less energy saving and a larger "bundle" in the draped state.

On the underside of the sheeting there is only a small number of threads, which is totally inadequate for dealing with the condensate which may form there. The air humidity in most cases is between 75 and 90 percent, and the sheeting will normally be at a temperature between the respective air temperatures above and below it, entailing a continual risk of its being below the dewpoint. The transverse threads fastened in the longitudinal threads are situated on the upper side of the sheeting at sufficient mutual spacing (30 mm) not to promote the transfer of moisture. The same also applies to the longitudinal threads, which on the underside of the sheeting have no mutual connection and are at 25 mm spacing. Since the sheeting forms channels, condensate will make its way to their lowest points, where it quickly forms falling drops. Greenhouses where the screen follows the slope of the roof have hardly proved successful and are no longer used to any appreciable extent for vegetable crops.

The so-called "Venlo" greenhouses developed in the Netherlands in the 1960s to 1980s had between-eaves spacing of 3.0 to 3.6 m. They were relatively low, with sidewalls about 2.5 to 3.0 m high and were mainly used in countries with no extreme temperatures, preferably for vegetable crops. The advantages of the Venlo structure are that it is inexpensive to manufacture, comprises little metal, uses the glass as a loadbearing element, and is inexpensive to erect. The sections are always put together and can thus form large surfaces of, for example, 10,000 square metres or more under one roof.

From the end of the 1980s onwards the development of the Venlo greenhouse proceeded further. It was discovered that its width could be increased from 3.6 to 5.5 m and it could be provided with narrower and neater bars to allow more light in, but to the detriment of the possibility of dealing with condensation.

High energy prices call for the utmost possible energy saving, which means that the screen installation needs to have the smallest possible surface area and be positioned horizontally. It also needs to be as planar as possible, for minimum energy loss, and to constitute in the drawn-back state the smallest possible "bundle", to minimise light loss.

### SUMMARY OF THE INVENTION

The object of the invention is to provide a greenhouse screen which is substantially tight but allows water vapour and small amounts of water to pass through it so that evaporation can take place unhindered and no water pockets will form, while at the same time it is tight enough to prevent the occurrence of convection flows in the greenhouse.

This is achieved by:
a greenhouse screen comprising the features of claim 1.

The new screen according to the invention makes it possible to use, as basic material, sheeting which is watertight but which after the application of the thread network is permeable to vapour and which to a limited extent also allows small amounts of water to pass through it. Using needles of various thicknesses at different mutual spacings makes it possible to control the transfer of moisture through the sheeting. The process does not entail stringent characteristics for the sheeting, provided that it is sufficiently tough and formable and highly stable to decomposition by UV radiation. This makes it possible to use raw material which is highly resistant to elongation and rupture and better with regard to radiation and cost than the material used in sheeting strip fabrics. The result is greater energy saving and a more favourable cost situation.

The new technique makes it possible to use extremely transparent (translucent) plastics and create an effective network of yarns with capillary effect which at the same time allows maximum light input. If in some cases a certain shading effect is desired, this can be achieved by using diffusing, white or otherwise reflective sheeting. Special requirements of particular growers can be met by applying to the sheeting a coating of, for example, aluminium. In sheeting strip fabric it is necessary to make sure that the strips are kept together and are sufficiently durable, which often prevents optimum translucence.

As previously mentioned, the new screen makes it easy to change the perforation and density of the holes. It is also possible, by leaving narrow gaps between webs of sheeting, to further enhance vapour permeability without causing appreciably more convection. Unlike sheeting strip fabric, permeability remains constant, since it is achieved by small holes. In sheeting strip fabric the strips are easily displaced or bent, causing undesirable gaps and hence less energy saving and uneven climatic conditions.

Moisture transfer between the underside and the upper side takes place in a capillary manner along the yarn which extends through the holes in the plastic sheeting. This arrangement also prevents the holes from being blocked by water drops which would reduce the moisture transfer. A more or less branching thread network will influence the capillary transfer or the binding of water. Since the yarn network is relatively free-standing in the strength aspects, this too can be optimised.

The new "screen" consists of two sides, an upper and a lower, which means that water is guided (transferred) to one side or the other by the yarn, so there is nothing to prevent its evaporating. In contrast, a sheeting strip fabric often consists of sheets which lie on top of one another and bind water between them, often resulting in algae formation.

For manufacturing technology reasons, sheeting can only be made about 2 m wide but the final product usually needs a width of 5 to 6 m. A plurality of webs of sheeting have therefore to be joined together, which is advantageously effected by the technique known as "stitch bonding" whereby the sheeting provides most of the strength and the yarn limits its elasticity. This is important when webs up to 300 m long have to be drawn across supporting wires in a greenhouse without becoming damaged.

In contrast, sheeting strip fabrics, even when handled with the utmost care, often sustain bent strips and small tears, defective stitches etc. In this respect the new technique has much to offer, particularly where sheeting has to be changed frequently. The labour cost is also high when work has to be done in greenhouses.
Shrinkage of a wide sheeting web is far easier to control than narrow sheeting strips at the production stage. Sheeting strips which are overstretched always revert to their original shape. In this context, even as little shrinkage as 1% is quite disastrous, amounting to 3 m in 300 m.

The new screen is in principle made of flexible thin plastic sheeting which can be draped, folded and compressed really hard without ever becoming damaged by such handling. The yarn layer is on the outer side and sustains no damage at all.

Once the fabric has served its time and needs changing, composite sheeting is to be preferred to a system of sheeting strips, which are often so weakened that they disintegrate.

As previously mentioned, the new screen comprises a plurality of sheeting webs, each up to a maximum of 2.5 m wide, which are advantageously fastened together by the same type of thread network as carries the capillary moisture transfer through the sheeting. The webs advantageously overlap one another or are situated edge to edge with the yarn as the connecting link between them, so that the finished product may be of a desired width. Production may be by so-called "stitch bonding" technique as modified for the purpose.

### BRIEF DESCRIPTION OF THE DRAWINGS

Fig. 1 depicts in somewhat enlarged form a portion of a greenhouse screen according to the invention.

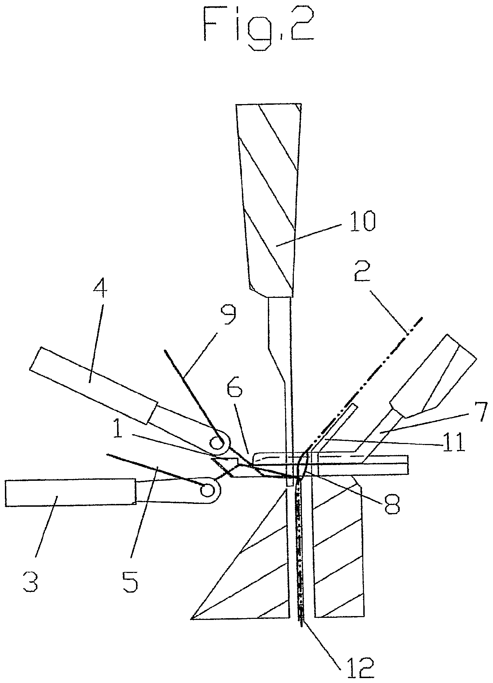

Fig. 2 depicts schematically a section through the parts of a sewing and crocheting machine which are relevant in the context.

### DETAILED DESCRIPTION OF PREFERRED EMBODIMENTS

The machine used for implementing the technique is in principle a known modified sewing and crocheting machine such as used, for example, for binding together fibrous material, e.g. fibre fleece.

The notations used in the drawing are as follows:
1 - one of a long row of mutually adjacent work needles of the compound through-stitch type with a sharp tip which move forwards and rearwards in their longitudinal direction and thereby sew through the sheeting 2.
2 - sheeting running into the machine.
3 - a first thread guide (there is one for each needle 1) which moves the thread 5 sideways, to the left and right alternately.
4 - a second thread guide which makes only a lateral connection between the stitch loops on one side of the sheeting.
5 - a thread in the first thread guide 3, which always forms stitches.
6 - a hook disposed on the forward end of the work needle 1.
7 - a slide which closes the hook 6 at the front end of the work needle 1.
8 - the latest stitch completed.
9 - a thread in the second thread feeder 4.
10 - a retaining pin which provides resistance when the work needle 1 is about to stitch through the sheeting 2 and which ensures that the work needle 1 does not take the previous stitch with it when making the next stitch.
11 - a knockover bar which provides resistance when the next stitch is about to be drawn through the previous stitch.
12 - completed sheeting (the screen) leaving the machine.

The reciprocating work needles 1 penetrate the sheeting 2 as they move from right to left (as shown in the drawing), and stop briefly in their extreme left position, at which stage the thread guides 3 and 4 are all situated above the respective work needles 1. Each thread guide 3 performs a pivoting movement sideways corresponding to one separation space and thereafter pivots downwards and places its thread 5 in the hook 6 of the respective work needle 1.

The work needles 1 are drawn back (to the right in the drawing) and a slide 7 for each needle closes the respective hook 6 so that the thread 5 is enclosed in the hook 6 but in such a way that the previous stitch 8 can slide over the end of the work needle 1, thereby forming a new stitch of the thread 5 when the needle 1 reaches its extreme right position.

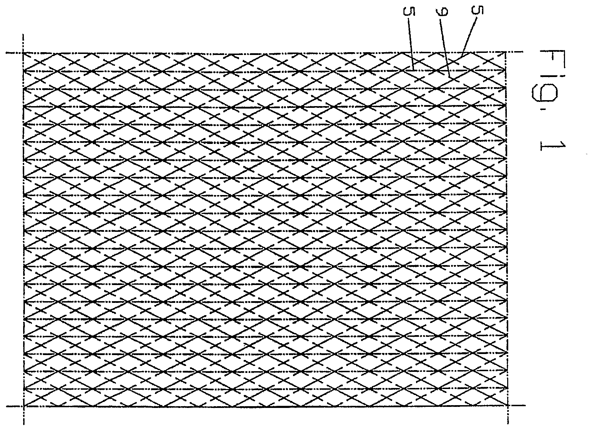

While the needles 1 are in their extreme right position, each thread guide 4 performs a lateral movement of one to three separation spaces, thereby forming by binding together with the thread 9 a lateral connection on the underside of the sheeting 2. In this situation the respective thread guide 3 may also perform a lateral movement, preferably in the opposite direction to the thread guide 4, in order to form a stronger thread network which is better from the capillary point of view. Fig. 1 represents the threads 5 and 9 on the underside of the sheeting 2 as continuous and discontinuous lines respectively, whereas the threads 5 represented by chain-double-dotted lines and placed in position by the thread guides 3 are situated on the upper side of the sheeting.

The moisture absorption capacity can be adapted to prevailing conditions, e.g. climate, crops etc., by using different thicknesses of work needles 1 and yarn thicknesses. The holes created by the needles 1 each constitute a slit which opens when the needle passes through the hole and which closes about the tensioned thread. The sheeting therefore needs to have a certain elasticity and toughness.

It has not become totally clear how in detail the transfer of moisture through the sheeting takes place.
- Condensation occurs on the underside of the sheeting, is intercepted in a capillary manner by the thread network and is transferred both sideways and vertically through the holes.
- The vapour pressure is often lower on the upper side of the sheeting than on its underside, owing to ventilation apertures in the greenhouse roof. Ventilation above the sheeting does not appreciably cool the interior of the greenhouse, since the sheeting prevents convection flows.
- The vapour pressure may be lower on the upper side of the sheeting since the temperature there is lower, typically 5-15°C, than inside the greenhouse.
- Both of the foregoing examples cause moisture to vaporise from the sheeting and condense back on the inside of the greenhouse roof glass, resulting in a continuous transfer and evaporation of water.
- Water vapour may also be transferred directly in vapour form through the holes in the fabric and condense directly on the glass or be led away by ventilation.
- All these principles do of course operate more or less simultaneously. The numerous variables in terms of weather, temperature and moisture in the greenhouse and rapid changes in them result in many possible combinations.

## Claims

1. A greenhouse screen or the like for substantially horizontal application and for thermal stratification of the air space under a greenhouse roof and which prevents drop formation from condensation, comprising:
a. a plurality of substantially unshrinkable mutually adjacent sheeting webs (2) made of a thin, flexible and watertight plastic, plastic laminate or similar material with high elongation resistance and rupture strength,
b. textile threads (5,9) which by means of closely set needles (1) are sewn through holes created by the needles (1) in the sheeting web (2), resulting in the formation of a threadwork on the upper side and underside of the sheeting web (2),
c. the threads (5, 9) having good properties for capillary transfer of moisture,
d. the perforations created by the needles (1) in the sheeting web (2) being adapted to enclose the threads (5, 9) in the sheeting web (2), and
e. the mutually adjacent sheeting webs (2) being connected to one another by said thread network, with the sheeting webs (2) overlapping one another, placed edge to edge or with the joints covered by overlapping sheeting strips,
**characterized in that**
f. the threadwork on the underside of the sheeting web (2) being configured as a network of threads which are mutually connected in both longitudinal and transverse directions on at least the underside of the sheeting web (2) and to transfer water vapor and moisture sideways and vertically through the holes from the underside of the screen to the upper side.

2. The greenhouse screen as claimed in claim 1, wherein each sheet has a width of no more than 2.5 m.

3. The greenhouse screen as claimed in claim 1 or 2, wherein shading is attained by using diffusing, white or otherwise reflective sheeting.

4. The greenhouse screen as claimed in claim 1 or 2, wherein at least one sheet is provided with a coating of, for example, aluminium.

5. The greenhouse screen as claimed in any one of the previous claims, wherein said sheeting webs are joined together by stitch bonding.

6. The greenhouse screen as claimed in claim 1, wherein the sheets and the thread network applied to them are provided with shape stability by thermofixation.

7. A method for manufacturing a greenhouse screen or the like according to claim 1, comprising the steps of:
a. a plurality of substantially unshrinkable mutually adjacent sheeting webs (2) made of a thin, flexible and watertight plastic, plastic laminate or similar material with high elongation resistance and rupture strength, being sewn through by a yarn system;
b. the yarn system comprising textile threads (5,9) which have properties for capillary transfer of moisture and which by means of closely set needles (1) are sewn through holes created by the needles in the sheeting web (2), resulting in the formation of a threadwork on the upper side and underside of the sheeting web (2);
c. the threadwork on the underside of the sheeting web (2) being configured as a network of threads which are mutually connected in both longitudinal and transverse directions on at least that side of the sheeting web (2), and to transfer water vapor and moisture sideways and vertically through the holes from the underside of the screen to the upper side.
d. the threads being enclosed by the perforations created by the needles (1) in the sheeting web (2), and
e. the mutually adjacent sheeting webs (2) being connected to one another by said thread network, with the sheeting webs (2) overlapping one another, placed edge to edge or with the joints covered by overlapping sheeting strips.

8. The method as claimed in claim 7, whereby the sheets and the thread network applied to them are provided with shape stability by thermofixation

## Patentansprüche

1. Gewächshausschirm oder dergleichen zur im Wesentlichen horizontalen Anwendung und zur thermischen Schichtung des Luftraums unter einem Gewächshausdach, das die Tropfenbildung durch Kondensation verhindert, umfassend:
a. eine Vielzahl von im Wesentlichen nicht schrumpfbaren, voneinander benachbarten Folienbahnen (2) aus einem dünnen, flexiblen und wasserdichten Kunststoff, Kunststofflaminat oder einem ähnlichen Material mit hoher Dehnungsbeständigkeit und Bruchfestigkeit,
b. Textilfäden (5, 9), die mittels eng gesetzter Nadeln (1) durch Löcher genäht werden, die durch die Nadeln (1) in der Folienbahn (2) erzeugt werden, was zur Bildung eines Fadennetzes auf der Ober- und Unterseite der Folienbahn (2) führt,
c. wobei die Fäden (5, 9) gute Eigenschaften für den Kapillartransfer von Feuchtigkeit aufweisen,
d. die Perforationen, die durch die Nadeln (1) in der Folienbahn (2) erzeugt werden, derart ausgelegt sind, dass sie die Fäden (5, 9) in der Folienbahn (2) umschließen, und
e. die voneinander benachbarten Folienbahnen (2) durch das Fadennetz miteinander verbunden sind, wobei sich die Folienbahnen (2) überlappen, Kante an Kante platziert sind oder die Fugen durch überlappende Folienstreifen bedeckt sind,
**dadurch gekennzeichnet, dass**
f. das Fadennetz an der Unterseite der Folienbahn (2) als ein Netz von Fäden konfiguriert ist, das an mindestens der Unterseite der Folienbahn (2) in Längs- und Querrichtung miteinander verbunden ist und Wasserdampf und Feuchtigkeit seitwärts und vertikal durch die Löcher von der Unterseite des Schirms zur Oberseite überträgt.

2. Gewächshausschirm nach Anspruch 1, wobei jede Folie eine Breite von nicht mehr als 2,5 m aufweist.

3. Gewächshausschirm nach Anspruch 1 oder 2, wobei die Schattengebung durch Verwendung einer diffundierenden, weißen oder auf andere Weise reflektierenden Folie erreicht wird.

4. Gewächshausschirm nach Anspruch 1 oder 2, wobei mindestens eine Folie mit einer Beschichtung aus zum Beispiel Aluminium bereitgestellt ist.

5. Gewächshausschirm nach einem der vorstehenden Ansprüche, wobei die Folienbahnen durch Stichbindung miteinander zusammengefügt sind.

6. Gewächshausschirm nach Anspruch 1, wobei die Folien und das darauf aufgebrachte Fadennetz durch Thermofixierung formstabilisiert bereitgestellt sind.

7. Verfahren zum Herstellen eines Gewächshausschirms oder dergleichen nach Anspruch 1, umfassend die Schritte:
a. Nähen, durch das Garnsystem, einer Vielzahl von im Wesentlichen nicht schrumpfbaren, voneinander benachbarten Folienbahnen (2) aus einem dünnen, flexiblen und wasserdichten Kunststoff, Kunststofflaminat oder einem ähnlichen Material mit hoher Dehnungsbeständigkeit und Bruchfestigkeit;
b. wobei das Garnsystem Textilfäden (5, 9) umfasst, die Eigenschaften für den Kapillartransfer von Feuchtigkeit aufweisen und die mittels eng gesetzter Nadeln (1) durch Löcher genäht werden, die durch die Nadeln in der Folienbahn (2) erzeugt werden, was zur Bildung eines Fadennetzes auf der Ober- und Unterseite der Folienbahn (2) führt;
c. das Fadennetz an der Unterseite der Folienbahn (2) als ein Netz von Fäden konfiguriert ist, das an mindestens dieser Seite der Folienbahn (2) in Längs- und Querrichtung miteinander verbunden ist und Wasserdampf und Feuchtigkeit seitwärts und vertikal durch die Löcher von der Unterseite des Schirms zur Oberseite überträgt;
d. die Fäden von den Perforationen umschlossen werden, die von den Nadeln (1) in der Folienbahn (2) erzeugt wurden, und
e. die voneinander benachbarten Folienbahnen (2) durch das Fadennetz miteinander verbunden sind, wobei sich die Folienbahnen (2) überlappen, Kante an Kante platziert sind oder die Fugen durch überlappende Folienstreifen bedeckt sind.

8. Verfahren nach Anspruch 7, wodurch die Folien und das darauf aufgebrachte Fadennetz durch Thermofixierung formstabilisiert bereitgestellt werden.

## Revendications

1. Ecran de serre ou analogue pour une application sensiblement horizontale et pour une stratification thermique de l'espace rempli d'air sous un toit de serre et qui empêche une formation de gouttes par condensation, comprenant :
a. une pluralité de bandes de feuille mutuellement adjacentes sensiblement irrétrécissables (2), constituées d'un plastique mince, flexible et étanche à l'eau, d'un stratifié de plastique ou d'un matériau similaire avec une résistance à l'allongement et une résistance à la rupture élevées,
b. des fils textiles (5,9) qui, par l'intermédiaire d'aiguilles établies serrées (1), sont cousus à travers des trous créés par les aiguilles (1) dans la bande de feuille (2), résultant dans la formation d'un ouvrage de fils sur la face supérieure et la face inférieure de la bande de feuille (2),
c. les fils (5, 9) ayant de bonnes propriétés pour un transfert d'humidité par capillarité,
d. les perforations créées par les aiguilles (1) dans la bande de feuille (2) étant adaptées pour enfermer les fils (5, 9) dans la bande de feuille (2), et
e. les bandes de feuille mutuellement adjacentes (2) étant reliées les unes aux autres par ledit réseau de fils, avec les bandes de feuille (2) se chevauchant les unes aux autres, placées bord à bord ou avec les joints recouverts par des bandes de feuille se chevauchant,
**caractérisé en ce que**
f. l'ouvrage de fil sur la face inférieure de la bande de feuille (2) est configuré sous la forme d'un réseau de fils qui sont mutuellement reliés dans les directions longitudinale et transversale au moins sur la face inférieure de la bande de feuille (2) et pour transférer de la vapeur d'eau et de l'humidité latéralement et verticalement à travers les trous de la face inférieure de l'écran vers la face supérieure.

2. Ecran de serre selon la revendication 1, dans lequel chaque feuille a une largeur d'au plus 2,5 m.

3. Ecran de serre selon la revendication 1 ou 2, dans lequel un ombrage est obtenu en utilisant des feuilles diffusantes, blanches ou sinon réfléchissantes.

4. Ecran de serre selon la revendication 1 ou 2, dans lequel au moins une feuille est dotée d'un revêtement, par exemple d'aluminium.

5. Ecran de serre selon l'une quelconque des revendications précédentes, dans lequel lesdites bandes de feuille sont jointes ensemble par couture.

6. Ecran de serre selon la revendication 1, dans lequel les feuilles et le réseau de fils qui leur est appliqué sont dotés d'une stabilité de forme par thermofixation.

7. Procédé de fabrication d'un écran de serre ou similaire selon la revendication 1, comprenant les étapes suivantes :
a. une pluralité de bandes de feuille mutuellement adjacentes sensiblement irrétrécissables (2), constituées d'un plastique mince, flexible et étanche à l'eau, d'un stratifié de plastique ou d'un matériau similaire avec une résistance à l'allongement et une résistance à la rupture élevées, sont cousues à travers un système de fil ;
b. le système de fil comprend des fils textiles (5,9) qui ont des propriétés de transfert d'humidité par capillarité et qui sont cousus par l'intermédiaire d'aiguilles établies serrées (1) à travers des trous créés par les aiguilles dans la bande de feuille (2), résultant en la formation d'un ouvrage de fils sur la face supérieure et la face inférieure de la bande de feuille (2) ;
c. l'ouvrage de fils sur la face inférieure de la bande de feuille (2) est configuré sous la forme d'un réseau de fils qui sont mutuellement reliés dans les directions longitudinale et transversale sur au moins ce côté de la bande de feuille (2), et pour transférer de la vapeur d'eau et de l'humidité latéralement et verticalement à travers les trous depuis la face inférieure de l'écran vers la face supérieure ;
d. les fils sont entourés par les perforations créées par les aiguilles (1) dans la bande de feuille (2), et
e. les bandes de feuille mutuellement adjacentes (2) sont reliées les unes aux autres par ledit réseau de fils, avec les bandes de feuille (2) se chevauchant les unes aux autres, placées bord à bord ou avec les joints recouverts par des bandes de feuille se chevauchant.

8. Procédé selon la revendication 7, dans lequel les feuilles et le réseau de fils qui leur est appliqué sont dotés d'une stabilité de forme par thermofixation.
